# EUROPEAN PATENT APPLICATION

(11) **EP 4 755 852 A1**
(43) Date of publication of application: **10.06.2026**
(21) Application number: 24219643.4
(22) Date of filing: 13.12.2024
(51) Int. Cl.: C01B 32/36

(54) **INTEGRATED SYSTEM OF REGENERATING ACTIVATED CARBON USING SUPERHEATED STEAM AND TREATING REGENERATED DISCHARGE MATTER**

(30) Priority: 05.12.2024 KR 20240179747
(71) Applicant: Wintec Glovis Co., Ltd., Seoul 05548 (KR)
(72) Inventor: LEE, Sang Hoon, Seoul (KR); SHIN, Cheol Ho, Namyangju-si, Gyeonggi-do (KR)
(74) Representative: M. Zardi & Co S.A.

(57) **Abstract**

Disclosed is an integrated system of regenerating activated carbon and treating water according to the present invention, which can minimize a loss rate of waste carbon and regenerated carbon at the same time as enhancing the efficiency of transfer of the waste carbon and the regenerated carbon, and which can also be embodied into an environment-friendly regeneration system by causing condensation water occurring at the time of regeneration to be removed in such a manner as to cause the condensation water to be burnt by the utilization of superheated steam.

## Description

### CROSS-REFERENCE TO RELATED APPLICATION

This application claims priority to Korean Patent Application No. 10-2024-0179747, filed on December 05 2024, in the Korean Intellectual Property Office, the entire contents of which are hereby incorporated by reference. The present patent application was filed as a result of the development of High-Efficiency Activated Carbon Regeneration Process Using Superheated Steam during a regeneration process (research period: July 1, 2024 ~ December 31, 2027) with respect to the materials and components technology development project (task serial number: RS-2024-00455655) performed by the Korean Ministry of Trade, Industry and Energy.

### BACKGROUND OF THE INVENTION

### Field of the Invention

The present invention relates to an integrated system of regenerating activated carbon and treating a regenerated discharge matter, and more specifically, to a system capable of integrally operating water treatment as well as automatically regenerating activated carbon by applying equipment intended for automatically discharging waste carbon and for putting regenerated carbon in, a device of transferring waste carbon and/or regenerated carbon, and so on to a water treatment-based activated carbon filtration system of a large capacity, and particularly, to a system equipped with technology of removing a discharge matter occurring in a regenerating process by introducing a burning process.

### Description of the Related Arts

A sewage and waste water treatment installation in which various kinds of sewage and waste water, such as sewage from daily life, industrial waste water, and so on, are purified into a fixed level and are discharged is operated by a method of adsorbing and purifying a noxious ingredient contained in the sewage and the waste water using an adsorbent by causing the sewage and the waste water to pass through water treatment tanks filled with the adsorbent, thereby making water clean, and an amorphous material composed mostly of carbon, activated carbon, which shows that a non-surface area and ability to adsorb are large and ability to remove a noxious substance is excellent, is mainly used as the adsorbent filled in the conventional water treatment tanks.

It is an actual situation that the activated carbon used as the adsorbent in the sewage and wastewater treatment installation for industrial purposes has been used in such a manner as to periodically replace the activated carbon by new one or regenerate it because ability to make and treat water clean lowers rapidly accordingly as an organic matter is filled in a gap formed on a surface of the activated carbon when it is a fixed time.

Like this, it is an actual situation that most activated carbon used as the adsorbent in the sewage and wastewater treatment installation for industrial purposes has been used in such a manner in such a manner as to periodically replace the activated carbon by new one or regenerate it because ability to make and treat water clean from a contaminant lowers rapidly accordingly as an organic matter is filled in a gap formed on a surface of the activated carbon when it is a fixed time.

In a conventional installation of a large capacity in which sewage and wastewater are treated, the largest burden in the light of expenses, in the light of an operation of the installation, and so on is a part related to the regeneration of activated carbon, and it is a trend that a great deal of effort has put into generally securing operation efficiency of the installation by a waste water treatment operation and an activated carbon regeneration operation being organically linked with each other.

Currently, a method of regenerating activated carbon is a method of regenerating waste carbon in activated carbon regeneration equipment by carrying the waste carbon out of a water treatment tanks and carrying it through outdoor long-range transportation, and then carrying the regenerated carbon to its original position again, thereby putting it into the water treatment tanks, this activated carbon regeneration method is disadvantageous in that time required for a series of regeneration work is delayed, a burden of expenses is also large accordingly as the regeneration work extends over a long time, and an operation ratio of the water treatment equipment lowers accordingly as operation intervals of the water treatment tanks are delayed, and it is also disadvantageous in that since a loss ratio of activated carbon occurring during a regeneration process is high, an economic loss is large.

Thus, through Korean Patent Registration No. 10-2092542, the applicant has ever suggested a new integrated waste water treatment system in which a device of automatically discharging and transferring waste carbon using air and high-pressure water through water treatment equipment and activated carbon regeneration equipment and automatically putting regenerated carbon in is installed.

However, in case of the technology disclosed in Korean Patent Registration No. 10-2092542 owned by the present applicant, although an economic and efficient system can be established because water treatment equipment to which a plurality of water treatment tanks belong and activated carbon regeneration equipment to which a plurality of activated carbon regeneration tanks belong are integrally operated, a limit, which is that a loss ratio of activated carbon having a loss in a fixed ratio during the transfer of wasted activated carbon and regenerated activated carbon fails to be removed completely, occurs. Furthermore, it is an actual situation that since there has been no constitution of a system intended for treating discharge matters, such as discharge water, waste steam, exhaust gas, and so on, occurring at the time of the regeneration of activated carbon, it has been required to develop the technology of treatment suitable to the protection of environment.

### [Related Art Document]

### [Patent Document]

(Patent Document 1) Korean Patent Registration No. 10-2092541
(Patent Document 2) Korean Patent Registration No. 10-2092542

### SUMMARY OF THE INVENTION

The present invention has been devised for solving the aforesaid problems, and an object of the present invention is to provide an integrated system capable of establishing an environment-friendly regeneration system in such a manner that when waste carbon discharged from water treatment tanks and regenerated carbon supplied from activated carbon regeneration tanks are transferred, a method of adjusting a mixing ratio of water and activated carbon and transferring a mixture in a state of being mixed through a hose pump unit is applied, so the efficiency of transfer of the waste carbon and regenerated carbon can enhance, a loss rate of the waste carbon and the regenerated carbon can also be minimized, and at the same time as this, discharge matters, such as discharge water, discharge steam, and waste gas, occurring during a process of regenerating the activated carbon can be removed by being treated according to each process step and being burnt.

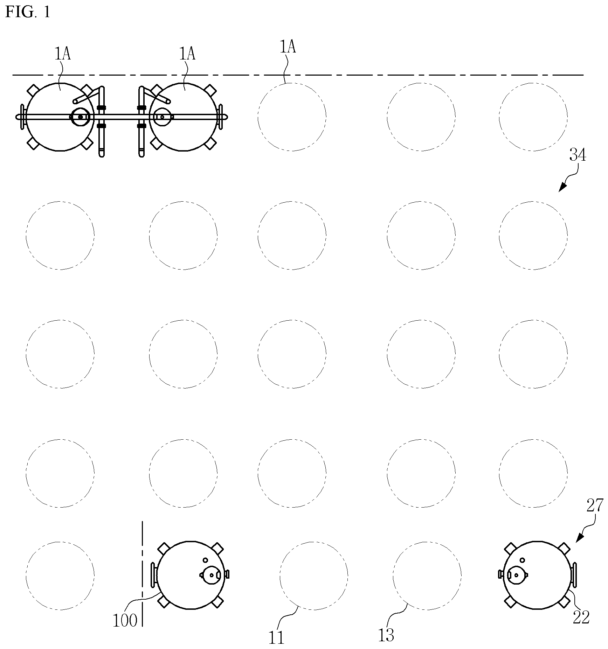

With respect to a mean for solving the aforesaid problems, according to one exemplary embodiment of the present invention, as illustrated in FIG. 1 to FIG. 5, an integrated system of regenerating activated carbon using superheated steam and treating a regenerated discharge matter may be provided, the system comprising: a superheated steam formation module configured to generate superheated steam and to supply the superheated steam through a pipe; an activated carbon regeneration module 100 configured to receive the superheated steam flowing in and supplied from the superheated steam formation boiler module and to spray the superheated steam through superheated steam spray modules S, i.e., S1 and S2 capable of spraying the superheated steam onto waste activated carbon, thereby carrying out regeneration; and a discharge water treatment module W configured to store up discharge water generated in the activated carbon regeneration module 100 and to mix discharge steam discharged from the activated carbon regeneration module 100 and waste gas supplied from a combustion module 400 with discharge water, thereby carrying out burning treatment.

According to exemplary embodiments of the present invention, an environment-friendly regeneration system can be built up in such a manner that when waste carbon discharged from water treatment tanks and regenerated carbon supplied from activated carbon regeneration tanks are transferred, a method of adjusting a mixing ratio of water and activated carbon and transferring a mixture in a state of being mixed through a hose pump unit is applied, so the efficiency of transfer of the waste carbon and the regenerated carbon can enhance, a loss rate of the waste carbon and the regenerated carbon can also be minimized, and at the same time as this, discharge matters, such as discharge water, waste steam, and exhaust gas, occurring during a process of regenerating the activated carbon can be removed by being treated according to each process step and being burnt.

In particular, the discharge water occurring at the time of regeneration of waste activated carbon, the discharge steam, and the waste gas are divided according to each section of a regeneration process and are thus burnt in a combustion module in the type of a quantitatively mixed gas, so it is advantages in that an environment-friendly property can enhance because a risk of contamination which may occur in the regeneration process can be removed completely.

Also, since a mixing chamber which mixes the waste gas with a high temperature occurring in the combustion module with the discharge water (condensation water) and the discharge steam is arranged and burning is able to be carried out by quantitative spray, it is also advantageous in that the efficiency of burning can improve and the practical use of heat energy can be realized efficiently.

Furthermore, according to the present invention, thanks to application of a new system of organically discharging and inputting waste carbon and regenerated carbon through water treatment equipment and activated carbon regeneration equipment at the same time as integrally operating the water treatment equipment to which a plurality of water treatment tanks belong and the activated carbon treatment equipment to which a plurality of activated carbon regeneration tanks belong, it is effective in that the efficiency of operation of the system can enhance, a loss ratio of the activated carbon can decrease, and an operating ratio of the water treatment equipment can also increase.

### BRIEF DESCRIPTION OF THE DRAWINGS

FIG. 1 and FIG. 2 are conceptual views illustrating an integrated system of regenerating activated carbon and treating a discharge matter according to one exemplary embodiment of the present invention.
FIG. 3 is a conceptual view illustrating the structure of a transfer pump configured to transfer the activated carbon as shown in FIG. 2.
FIG. 4 is a conceptual view for describing the arrangement of a regeneration module having activated carbon regeneration tanks as shown in FIG. 2 and a discharge water treatment module.
FIG. 5 is a block diagram for describing the constitution relationship between the regeneration module and the discharge water treatment module and an operational process according to the present invention.
FIG. 6 and FIG. 7 are conceptual views of process constitution for describing processes of treating discharge water according to the present invention.

### DETAILED DESCRIPTION OF THE INVENTION

Advantages and features of the present invention, and methods of achieving them will be clear with reference to exemplary embodiments described in detail below as well as the accompanying drawings. However, the present invention may be embodied in other forms without being limited to the exemplary embodiments described herein. On the contrary, the exemplary embodiments introduced herein are provided with intent to make the disclosed contents thorough and complete, and to sufficiently communicate the technical idea of the present invention to those having ordinary skill in the art.

Hereinafter, the present invention is described in detail with reference to the accompanying drawings below.

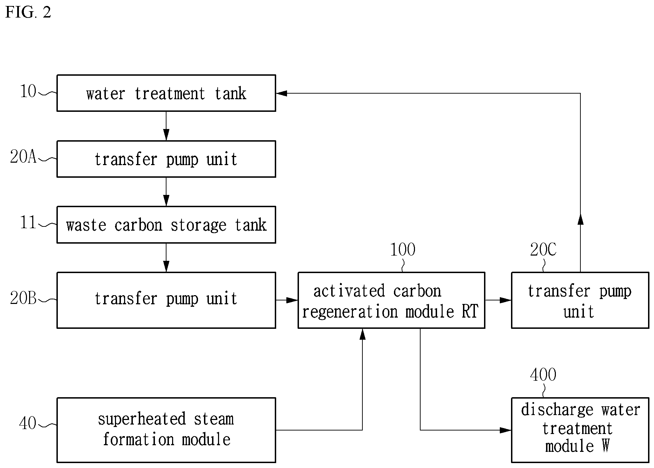

FIG. 1 is a plan view showing the layout of an integrated system of regenerating activated carbon using superheated steam and treating a regenerated discharge matter (hereinafter referred to as "the present invention") according to one exemplary embodiment of the present invention, and FIG. 2 is a block diagram showing line constitution of the activated carbon regeneration- and water treatment-integrated system according to said one exemplary embodiment of the present invention.

As shown in FIG. 1, the activated carbon regeneration- and water treatment-integrated system to which the present invention is applied is composed of a new integrated waste water treatment system of integrally operating large-scale water treatment equipment to which a plurality of water treatment tanks belong, and minimum activated carbon regeneration equipment to which a regeneration module having a plurality of activated carbon regeneration tanks belongs, efficiently discharging and transferring waste carbon based on a hose pump unit through the water treatment equipment the activated carbon regeneration equipment, and automatically inputting regenerated carbon. The system is composed of a new integrated waste water treatment system of integrally operating large-scale water treatment equipment to which a plurality of water treatment tanks belong, and minimum activated carbon regeneration equipment to which a plurality of activated carbon regeneration tanks belongs, and automatically inputting regenerated carbon as well as efficiently discharging and transferring waste carbon by minimizing a loss ratio.

That is, the present invention comprises: a plurality of water treatment tanks 1A configured to treat, by adsorption, impurities contained in waste water with activated carbon; an waste carbon storage tank 11 configured to store up waste carbon discharged from the water treatment tanks 1A; a regeneration module 100 having at least one or more of activated carbon regeneration tanks configured to regenerate and treat activated carbon supplied from the waste carbon storage tank 11; and a regenerated carbon storage tank 13 configured to store up regenerated carbon discharged from the activated carbon regeneration module 100 and to then supply it to the water treatment tanks 1A.

The water treatment tanks 10 are equipment configured to adsorb a noxious ingredient contained in waste water with an adsorbent filled in the inside, for example, activated carbon by causing the activated carbon to pass through the waste water and to carry out discharging after purification. Unlike conventional water treatment tanks only intended for treating waste water purely without equipment to regenerate activated carbon, since the water treatment tanks 10 have structure which causes the activated carbon to be discharged for regeneration and regenerated carbon to be inputted, it is advantageous in that the water treatment tanks are profitable in the light of an aspect of operation efficiency as well as in the light of a structural aspect.

In the present invention, as illustrated in FIG. 2, under the condition that treatment operation performed in the conventional water treatment tanks 10 is applied by the structure of an existing invention being adopted, in a transfer process performed during a process of transferring waste carbon, transfer pump units 20A, 20B, and 20C equipped with their respective hose pump units rather than a discharge method of applying an existing pumping bath and high-pressure water are adopted in order to realize transfer of the waste carbon or regenerated activated carbon which is described below, so a loss of the activated carbon can be minimized.

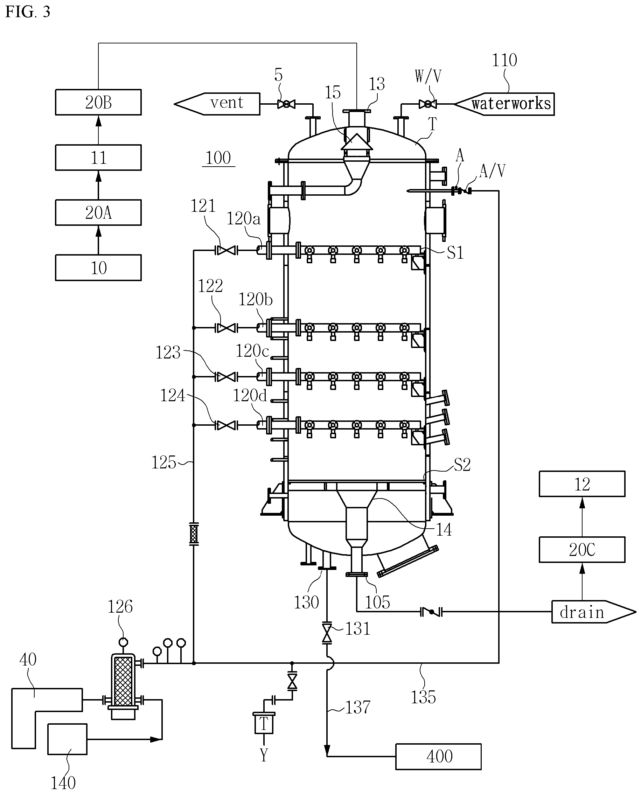

These transfer pump units 20, i.e., 20A, 20B, and 20C according to the present invention which are used in the water-powered transfer process may embody, as illustrated in FIG. 3, a mixture in a state of the water and the activated carbon or the waste activated carbon being mixed into a standard range of 1 : 1.3 to 2.0, which is that a mixing ratio of the water to the activated carbon or waste activated carbon is expressed in a volume ratio, and may comprise an inlet 22 configured to cause the mixture in the state of being mixed in such a ratio to flow into the inside of an elastic hose 23, a press roller 25 configured to apply pressure to the elastic hose 23 and to carry out compression and rolling motions, and a rotation drive part 25A configured to cause the press roller 25 to rotate.

That is, with respect to the transfer pump units 20 which have device structure intended for forcibly transferring the waste carbon discharged from the water treatment tanks 10 to the waste carbon storage tank 11 and for replacing the existing pumping bath, the elastic hose 23 having elasticity is mounted, the elastic hose and the press roller come into contact with each other by a rotation of the press roller so that the hose is compressed, the elastic hose generates strong sucking force using restoring force to restore to the original state again after compression, and transfer is able to be carried out in such a manner as to suck the waste carbon or the regenerated activated carbon based on this sucking force.

This transfer method may cause the mixture of the water and the waste carbon in the water treatment tanks, or the mixture of the regenerated activated carbon and the water in the activated carbon regeneration tanks to be transferred thanks to powerful inspiratory force and discharge force. At this time, the mixture in a state of the water and the activated carbon or the waste activated carbon being mixed may be embodied in the standard range of 1 : 1.3 to 1 : 2.0 which represents the mixing ratio of the water to the activated carbon or the waste activated carbon into the volume ratio.

The most preferably, the mixing ratio of the water to the activated carbon or the waste activated carbon contained in the mixture in a state of the water and the activated carbon or the waste activated carbon being mixed may be embodied in the ratio of 1 to 1.5. In this range, when the percentage of the water increases too much, sucking force is influenced by viscosity which becomes low, and when the percentage of the water decreases too much, viscosity of the mixture with respect to the activated carbon becomes large, so transfer is hindered and crushing of the activated carbon occurs. Accordingly, it is preferable that the mixing ratio of the water to the waste carbon (or the activated carbon) described above is adjusted into the aforesaid optimum range, so the efficient transfer process described above may be controlled in such a manner as to check the mixing ratio of the mixture flowing in in real time and to cause the water to flows in the inside and to be discharged in the optimum range above. Like this, the method of adjusting the mixing ratio of the water to the activated carbon and transferring the mixture in the state of being mixed through the hose pump units is applied so that the efficiency of transfer of the waste carbon and the regenerated carbon can enhance, and at the same time as this, a loss rate of the waste carbon and the regenerated carbon can be minimized.

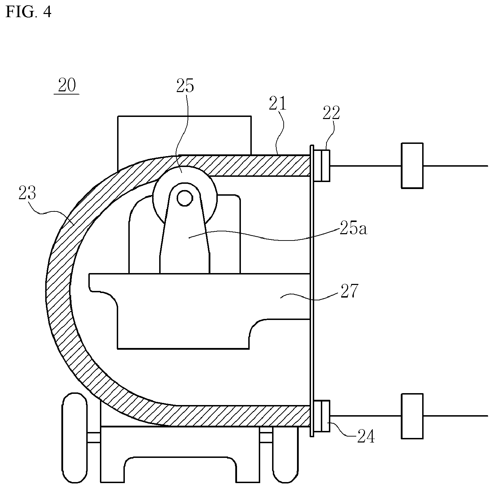

FIG. 4 illustrates a flow chart concerning the arrangement of main constitution according to the present invention as aforesaid in the sections related to FIG. 1 to FIG. 3. In particular, FIG. 4 is a conceptual view illustrating the main constitution arranged with structure of the activated carbon regeneration module 100 according to the present invention as a center.

Referring to FIG. 1 to FIG. 4, in the present invention, the waste carbon is transferred from the water treatment tanks 10 to the waste carbon storage tank 11 through the first transfer pump unit 20A, and then flows in through an inflow part 13 located at an upper portion of the activated carbon regeneration tanks T as shown in FIG. 4 through the second transfer pump unit 20B from the waste carbon storage tank 11.

The activated carbon regeneration tanks T receives the waste activated carbon in the inside, and at the same time as this, the activated carbon regeneration tanks function to wash out the waste activated carbon which is received or to cause regeneration to be carried out by dehydration and drying of the waste activated carbon which is transferred by water power, and by the spray of superheated steam.

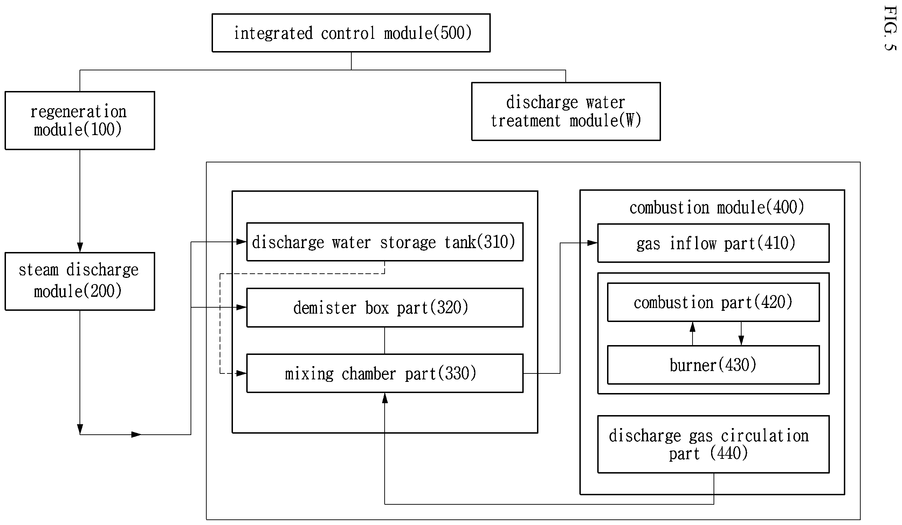

Of course, the waste activated carbon may be treated according to each process step occurring in this regeneration process, the treatment may be carried out according to an amount and a characteristic of a discharge matter occurring in an initial step of the process, purification work may be carried out by the discharge water treatment module W as illustrated in FIG. 5, and at the same time as this, oxidation may be realized by a combustion module 400.

According to one exemplary embodiment of the present invention, with respect to structure of the regeneration tanks of the activated carbon regeneration module 100, as illustrated in FIG. 4, in the inside thereof, a plurality of superheated steam spray modules S, i.e., S1 and S2 arranged in horizontal structure may be arranged up and down.

The superheated steam supplied to the superheated steam spray modules S, i.e., S1 and S2 is formed in a superheated steam formation module 40 arranged in the outside of the activated carbon regeneration tanks 100. The superheated steam may be supplied to activated carbon through a plurality of superheated steam supply modules 120A, 120B, 120C, and 120D furnished with a superheated steam supply line 125 which communicates with the activated carbon regeneration tanks 100.

Of course, the arrangement structure of the superheated steam spray modules S, i.e., S2 and S2 according to the present exemplary embodiment is not limited thereto, but is able to be applied in such a manner that a nozzle structure which supplies the superheated steam into the inside of the regeneration tanks in a spray form is modified variously.

The upper spray module S1 which sprays the superheated steam according to the present invention may cause the superheated steam formed by the superheated steam formation module 40 to be supplied through the superheated steam supply line 125 and may also cause the acceptance or rejection of supply to be controlled through each superheated steam supply valve 121, 122, 123, 124, and 125.

When the regeneration process of the activated carbon is performed by the spray of the superheated steam, the discharge matter, such as discharge water, discharge steam, discharged waste gas, and so on (hereinafter referred to as "the discharge matter"), is discharged to the outside of the activated carbon regeneration tanks T, and according to the present invention, the purification process is carried out by the discharge water treatment module W which purifies the discharge matter discharged from the activated carbon regeneration tanks T.

FIG. 5 is a conceptual view for describing main constitution of the present invention which embodies a process of treating the discharged water occurring after regeneration of the activated carbon in the regeneration module 100 having the regeneration tanks T according to the present invention as shown in FIG. 4.

Referring to FIG. 4 and FIG. 5, according to the present exemplary embodiment, the regeneration module 100 furnished with the regeneration tanks T configured to carry out regeneration by receiving the waste activated carbon flowing in and spraying the superheated steam into a receiving space, and a steam discharge module 200 configured to separate and discharge the superheated steam used in the regeneration process are included. Furthermore, the combustion module 400 which communicates with the discharge water treatment module W may be furnished.

That is, the system according to the present invention may be configured to comprise: the discharge water treatment module W including a discharge water storage tank 310 configured to store up the discharge water generated in the waste activated carbon regeneration module 100 intended for carrying out regeneration by spraying the superheated steam onto the waste activated carbon, a demister box part 320 configured to receive the condensation water stored up in the condensation storage tank 310 transferred through a pipe line and to remove moisture and dust by causing the discharge steam generated in the regeneration module 100 to flow in, and a mixing chamber part 330 configured to receive and mix the discharge steam discharged from the regeneration module and the waste gas supplied from the combustion module 400; and the combustion module 400 configured to cause a mixed gas in a gas form resulting from mixing the condensation water, the discharge steam, and waste gas through the mixing chamber part 330 to be burnt by receiving the mixed gas transferred.

The regeneration module 100 is a device which carries out a process of washing out the waste activated carbon received at the same time as receiving the waste activated carbon in the inside, or functions to cause the regeneration to be realized through dehydration and drying of the waste activated carbon transferred by water power and spraying of the superheated steam, and the regeneration module has a concept including device structure which is that the condensation water and the discharge steam are discharged in the regeneration process.

That is, although the present applicant exemplifies a structure, such as the regeneration tanks configured to regenerate the waste activated carbon by spraying the superheated steam onto the inside, as aforesaid in the sections concerning FIG. 1 and FIG. 2, the structure is not limited thereto, and all devices which carry out a regeneration process through superheated steam may be regarded as belonging to a category of the regeneration module according to the present invention.

In accordance with installation structure of the regeneration module 100, the steam discharge module 200 which discharges the discharge steam with a high temperature occurring in the regeneration module may selectively be included, and additionally, a dust collection module configured to purify dust or a contaminant contained in the discharge steam may selectively be arranged.

In particular, according to the present invention, as described above, it is characteristic in that the discharge water treatment module W configured to treat the condensation water and the discharge steam discharged from the regeneration module 100, and the combustion module 400 configured to cause the condensation water and the discharge steam to be burnt by mixing them in a gas form and carrying out spraying are furnished.

This discharge treatment module W may comprise: the discharge water storage tank 310 configured to store up moisture discharged from the activated carbon in the waste activated carbon regeneration module 100 intended for carrying out the regeneration by spraying the superheated steam onto the waste activated carbon, or condensation water resulting from condensation of this moisture (hereinafter referred to as "the discharge water"); the demister box part 320 configured to remove moisture and dust by causing the discharge steam generated in the regeneration module 100 to flow in; and the mixing chamber part 330 configured to receive the discharge water stored up in the discharge water storage tank 310 and transferred via a pipe line, and to receive and mix the discharge steam discharged from the regeneration module and the waste gas supplied from the combustion module 400

In the case of the discharge water treatment module W according to a preferable exemplary embodiment of the present invention, it is characteristic in that because an amount of the discharge matter, such as the discharge water, the discharge steam, the waste gas, and so on, which is generated, becomes different according to a lapse of the process in which the regeneration module 100 carries out the regeneration process, in order to efficiently treat the discharge matter, storage, discharge, and combustion processes of the discharge matter may be divided and treated by an integrated control module 500.

### 1. Process of Treating Discharge Matter in Initial Section of Regeneration Process

In case that waste activated carbon is regenerated in the regeneration module 100, with respect to an initial section of regeneration shown within three hours after a regeneration process of activated carbon performed by spraying superheated steam onto the waste activated carbon starts, it is characteristic in that the discharge of discharge water increases highly and the occurrence of discharge steam is not frequent.

On the contrary, in the case of a latter section of regeneration shown after three hours to five hours have passed since the regeneration process of the waste activated carbon started, distinct characteristics, which are that the discharge of the discharge water reduces and the amount of the discharge steam and the waste gas increases, occur.

Thus, according to the present invention, in the case of the initial section of the regeneration shown within three hours after the regeneration process of the waste activated carbon starts, the discharge water which occurs is treated by a process of being received in the discharge water storage tank 310, the waste gas and the discharge steam which occur pass through the demister box part 320 and the mixing chamber part 330 or are treated in a method of being oxidized directly in the combustion module 400 at 900°C or more, thereby being discharged in the atmosphere.

Also, in the case of the latter section of the regeneration shown after three to five hours have passed since the regeneration process of the waste activated carbon started, the discharge steam which occurs may be treated by a process of being put into the demister box part 320 and the mixing chamber part 330, and the discharge steam and the condensation water which occurs may be treated by a method of being formed in the form of a mixed gas through the mixing chamber, maintaining a temperature of 100°C or more, and being sprayed and inputted in a fixed quantity, thereby being oxidized in the combustion module 400 at 900°C or more and being discharged in the atmosphere.

### 2. Treatment of Discharge Matter in Latter Section of Regeneration Process

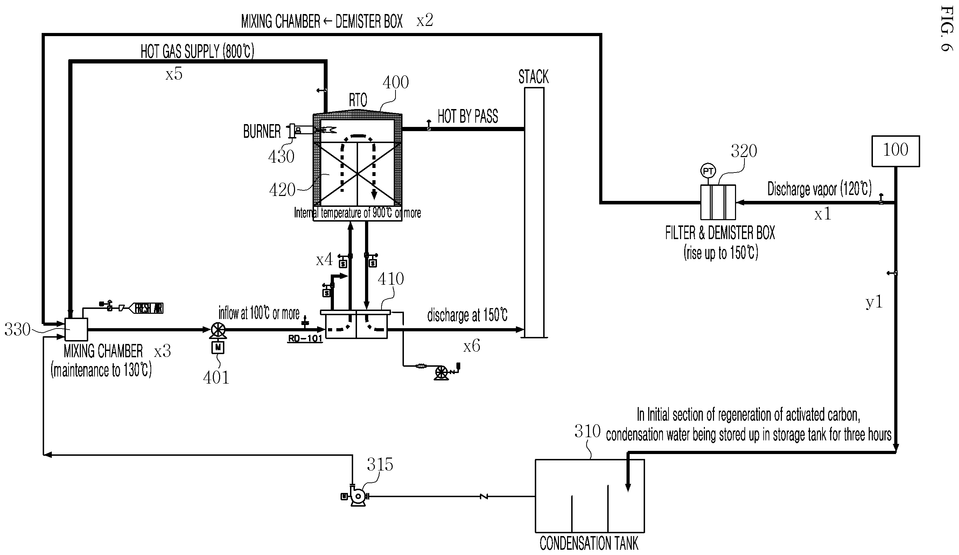

With reference to FIG. 6, an operational process of the discharge water treatment module W according to the present invention is described in detail.

Referring to FIG. 6, it is a flow chart and a conceptual view for describing a drive method according to the present invention with respect to the case of an initial section of regeneration shown within three hours after a regeneration process of waste activated carbon starts.

Specifically, referring to the flow chart of the process illustrated in FIG. 6, in case that the regeneration process starts in the regeneration module 100, in the initial section of the regeneration shown within three hours after the regeneration process of the waste activated carbon starts (hereinafter referred as "the initial section of the regeneration"), discharge steam (120°C or more) and a large quantity of discharge water occur.

In this initial section of the regeneration, the discharge water which is discharged is stored up into the discharge water storage tank 310 (a pathway of y1), and the discharge steam which is discharged passes through the demister box part 320, goes through a process of removing dust and moisture (a pathway of x1), and then flows into the mixing chamber part 330 through a pathway of x2 along a pipe line (the pathway of x2).

The mixing chamber part 330 is defined as constitution which comprises all components, such as the pipe line connected with the mixing chamber, a valve, a spray injection nozzle, and so on, are included, and in the case of the mixing chamber, it is a chamber having airtight structure and is furnished with a receiving space for mixing in its inside, and the mixing chamber is able to cause the discharge water which changes into steam by a discharge water spray nozzle located at the outside to flow in.

Also, the mixing chamber part is used as a space which receives the discharge steam flowing in, and the waste gas (a high temperature) described later, thereby mixing them, and in this case, the discharge steam has the temperature of 120°C or more, in a section in which the discharge steam passes through the demister box part 320, the temperature of the discharge steam reads 110°C or more, and when the discharge steam flows into the mixing chamber part 330, the temperature reads 110°C or more.

The discharge steam flowing in as this flows into the combustion module 400 via the mixing chamber part 330 (pathways of x3 and x4). Then, the discharge steam is discharged in the atmosphere by being oxidized at 900°C or more (a pathway of x6).

At this time, since a heat exchanger is arranged at a back end of the gas inflow part 410, the temperature of the gas discharged may lower.

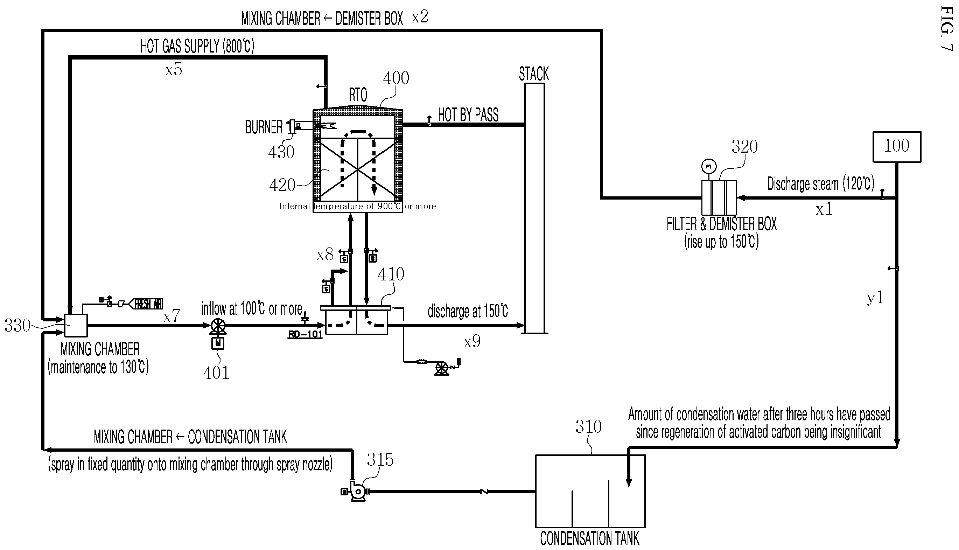

FIG. 7 is a flow chart and a process chart illustrating an operational process according to the present invention with respect to the case of a latter section of regeneration shown after three hours to five hours have passed since a regeneration process of activated carbon started.

Referring to FIG. 7 illustrated, in the latter section of the regeneration, the discharge water discharged in the latter section of the regeneration according to the present invention is stored up into the discharge storage tank 310 (the pathway of y1), the discharge steam which is discharged passes through the demister box part 320 and goes through a process of removing dust and moisture (the pathway of x1), and then flows into the mixing chamber part 330 v via the pathway of x2 along the pipe line (the pathway of x2). These movement pathways of the discharge steam are identical with those shown in the initial section of the regeneration.

However, in the latter section of the regeneration, because a discharge amount of the condensation water decreases, the condensation water is transferred through the condensation water pump 315 from the condensation water storage tank 310, and the condensation water is quantitatively sprayed onto the mixing chamber part 330 through a spray nozzle (a pathway of y2).

The condensation water sprayed as this is mixed with the discharge steam which flows into the mixing chamber, and is also mixed with the waste gas (having a temperature of 800°C or more) which flows in through the waste gas circulation part 440 of the combustion module 400, so a mixture in a gas phase (hereinafter referred to as "the mixed gas") is formed.

Like this, with respect to forming the mixed gas by circulating a part of the discharge gas with the mixing chamber part, the mixed gas having a temperature of 100°C or more, which is mixed in the gas form in such a manner as to mix the discharge water, the discharge steam, and the waste gas by the mixing chamber part 330 without installation of a separate heating source, is transferred to the combustion module 400 in a state of maintaining the temperature of 100°C or more (pathways of x7 and x8).

In the light of the fact that this process of, by the mixing chamber part, circulating a part of the discharge gas may cause the temperature of the mixed gas to be formed in a high temperature, so efficiency at the time of burning may strengthen, and the condensation water may be oxidized by changing into steam in the gas form, the process can cause very efficient use of heat to be embodied.

Like this, the mixed gas with the temperature of 100°C or more, which is mixed in the gas form in such a manner as to mix the discharge water, the discharge steam, and the waste gas through the mixing chamber part 330, is transferred to the combustion module 400 in a state of maintaining the temperature of 100°C or more (the pathways of x7 and x8).

In the combustion module 400, a combustion process of removing a bad smell and an atmosphere pollution matter at a temperature of 900°C or more is carried out by the burner 430 like a combustion burner, so the mixed gas is discharged after being burnt within a combustion part 420 (a pathway of x9).

Based on this process, in the latter section of the regeneration, because the condensation water occurring during the regeneration process is removed by being burnt within the burner in the form of the mixed gas, although a special treatment system of treating the condensation water, or pharmaceuticals are not used, the condensation water can be treated easily and safely, so efficiency of the process and process expenses can largely decrease, and furthermore an environment-friendly property can strengthen.

There is no doubt that the treatment process of the discharge water shown in FIG. 5 to FIG. 7 as described above may be applied to the process of oxidizing and treating the condensation water of the regeneration equipment having the regeneration tank structure as aforesaid in the sections concerning FIG. 2.

In the case of the discharge water treatment module W according to the present invention, it can be applied so as to perform a function of receiving the condensation water of the equipment configured to regenerate the waste activated carbon using various kinds of superheated steam, as well as this general activated carbon regeneration equipment, flowing in, thereby treating it.

As previously described, although the present invention has been described based on the preferable exemplary embodiments, it is clear, to those having ordinary skill in the technical field to which the present invention pertains, that the technical idea of the present invention isn't limited thereto, but is able to modify or alter within the scope described in the claims, and these modifications or alternations can be regarded as belonging to the appended claims.

## Claims

1. An integrated system of regenerating activated carbon using superheated steam and treating a regenerated discharge matter, the system comprising:
a superheated steam formation module configured to generate superheated steam and to supply the superheated steam through a pipe;
an activated carbon regeneration module configured to receive the superheated steam flowing in and supplied from the superheated steam formation boiler module, thereby carrying out regeneration in such a manner as to spray the superheated steam through a superheated steam spray module capable of spraying the superheated steam onto waste activated carbon received in the inside; and
a discharge water treatment module configured to cause a discharge matter generated in the activated carbon regeneration module to come into a combustion module, thereby carrying out a burning treatment.

2. The system of claim 1, wherein the discharge water treatment module comprises:
a discharge water storage tank configured to receive condensation water generated in the activated carbon regeneration module through a pipe line and to store up it;
a demister box part configured to cause discharge steam generated in the activated carbon regeneration module to flow in, thereby removing moisture and dust; and
a mixing chamber part configured to receive discharge water stored up in the discharge water storage tank by transfer through a pipe line and to receive and mix the discharge steam discharged from the regeneration module and waste gas supplied from the combustion module.

3. The system of claim 2, wherein the discharge water treatment module causes a mixed gas in a gas form resulting from mixing the discharge water, the discharge steam, and the waste gas mixed by the mixing chamber part to be transferred and received into the combustion module and to be burnt.

4. The system of claim 3, wherein the combustion module comprises:
a gas inflow part configured to cause the mixed gas mixed in the mixing chamber part to flow in;
a combustion part configured to receive the mixed gas flowing in from the gas inflow part and to cause the mixed gas to be burnt by a burner; and
a waste gas circulation part configured to eject a part of the burnt gas having a temperature of 800°C or more burnt in the combustion part, thereby circulating it to the mixing chamber part.

5. The system of claim 4, wherein in the case of an initial section of regeneration shown within three hours after a regeneration process of waste activated carbon starts, the discharge water treatment module causes the discharge water which occurs to be treated by being stored up in the condensation water storage tank and causes the discharge steam and the waste gas which occur to pass through the demister box part and the mixing chamber part and to be discharged in the atmosphere by being oxidized in the combustion module at 900°C or more.

6. The system of claim 5, wherein in the case of a latter section of regeneration shown after three hours to five hours have passed since the regeneration process of the waste activated carbon started, the discharge water treatment module causes the discharge steam which occurs to go through a process of being put into the demister box part and the mixing chamber part, and also causes the discharge water which occurs to move to the mixing chamber part via the storage tank, to maintains a temperature of 100°C or more, to be sprayed and inputted in a fixed quantity, wherein the discharge steam and the discharge water are formed in the form of a mixed gas within the mixing chamber part, thereby being oxidized in the combustion module by a burning process at 900°C or more and being discharged in the atmosphere.

7. The system of claim 6, further comprising an integrated control module configured to control the discharge water treatment module and the combustion module, thereby causing treatment methods of the condensation water, the discharge steam, and the waste gas to be carried out by dividing the initial section of the regeneration and the latter section of the regeneration.

8. The system of claim 7, wherein the activated carbon regeneration module has structure comprising regeneration tanks furnished with at least one or more of superheated steam spray modules capable of spraying superheated steam onto the waste activated carbon is included in the inside.

9. The system of claim 8, wherein transfer pump units causes a mixing ratio of water to activated carbon or water to waste activated carbon contained in a mixture in a state of the water and the activated carbon or the waste activated carbon being mixed to be embodied in a standard range of 1 : 1.3 to 2.0 with respect to a volume ratio.

10. The system of claim 9, comprising an inlet configured to cause the mixture to flow into the inside of an elastic hose;
a press roller configured to apply pressure to the elastic hose and to carry out compression and rolling motions; and
a rotation drive part configured to cause the press roller to rotate.
